# EUROPEAN PATENT APPLICATION

(11) **EP 4 358 484 A1**
(43) Date of publication of application: **24.04.2024**
(21) Application number: 22824177.4
(22) Date of filing: 14.06.2022
(51) Int. Cl.: H04L 43/08, H04L 43/02

(54) **INTRUSION DETECTION METHOD, APPARATUS AND SYSTEM, AND ELECTRONIC DEVICE AND COMPUTER-READABLE MEDIUM**

(30) Priority: 18.06.2021 CN 202110683361
(71) Applicant: ZTE Corporation, Shenzhen, Guangdong 518057 (CN)
(72) Inventor: GUO, Tian, Shenzhen, Guangdong 518057 (CN)
(74) Representative: Ipsilon
(86) International application number: PCT/CN2022/098539
(87) International publication number: WO 2022/262698

(57) **Abstract**

Disclosed are an intrusion detection method, apparatus and system, an intrusion detection subsystem, an electronic device, and a computer-readable storage medium. The intrusion detection method includes: acquiring behavior benchmark data of a physical node of a cloud platform system, with the behavior benchmark data being behavior data of the physical node in a normal operating state of the cloud platform system; acquiring runtime behavior data of the physical node in an actual operating process of the cloud platform system; and generating alarm information in a case where the behavior benchmark data conflicts with the runtime behavior data, and reporting the alarm information to an intrusion detection apparatus or an intrusion detection subsystem.

## Description

### TECHNICAL FIELD

Embodiments of the present disclosure relate to the field of computer technology.

### BACKGROUND

One of main objectives of a cloud platform system is to improve utilization of physical resources as much as possible so as to reduce an overall operation and maintenance cost. In order to achieve this objective, a plurality of different service processes (even including a platform management process) need to be allowed to run on a same physical node of the cloud platform system.

### SUMMARY

The embodiments of the present disclosure provide an intrusion detection method, apparatus and system, an intrusion detection subsystem, an electronic device, and a computer-readable storage medium.

In a first aspect, an embodiment of the present disclosure provides an intrusion detection method, including: acquiring behavior benchmark data of a physical node of a cloud platform system, wherein the behavior benchmark data is behavior data of the physical node in a normal operating state of the cloud platform system; acquiring runtime behavior data of the physical node in an actual operating process of the cloud platform system; and generating alarm information in a case where the behavior benchmark data conflicts with the runtime behavior data, and reporting the alarm information to an intrusion detection apparatus or an intrusion detection subsystem.

In a second aspect, an embodiment of the present disclosure provides an intrusion detection method, including: acquiring behavior benchmark data of a physical node of a cloud platform system, wherein the behavior benchmark data is behavior data of the physical node in a normal operating state of the cloud platform system; and sending the behavior benchmark data to an agent module provided in the physical node.

In a third aspect, an embodiment of the present disclosure provides an electronic device, including: at least one processor; and a memory having stored thereon at least one program which, when executed by the at least one processor, implements any one of the above intrusion detection methods.

In a fourth aspect, an embodiment of the present disclosure provides a computer-readable storage medium having stored thereon a computer program which, when executed by a processor, implements any one of the above intrusion detection methods.

In a fifth aspect, an embodiment of the present disclosure provides an intrusion detection apparatus, including: a first acquisition module configured to acquire behavior benchmark data of a physical node of a cloud platform system, wherein the behavior benchmark data is behavior data of the physical node in a normal operating state of the cloud platform system; a second acquisition module configured to acquire runtime behavior data of the physical node in an actual operating process of the cloud platform system; and a detection module configured to generate alarm information in a case where the behavior benchmark data conflicts with the runtime behavior data, and report the alarm information to an intrusion detection apparatus or an intrusion detection subsystem.

In a sixth aspect, an embodiment of the present disclosure provides an intrusion detection apparatus, including: a third acquisition module configured to acquire behavior benchmark data of a physical node of a cloud platform system, wherein the behavior benchmark data is behavior data of the physical node in a normal operating state of the cloud platform system; and a communication module configured to send the behavior benchmark data to an agent module provided in the physical nod.

In a seventh aspect, an embodiment of the present disclosure provides an intrusion detection subsystem, including: a third acquisition module configured to acquire behavior benchmark data of a physical node of a cloud platform system, wherein the behavior benchmark data is behavior data of the physical node in a normal operating state of the cloud platform system; and a communication module configured to send the behavior benchmark data to an agent module provided in the physical node; wherein the third acquisition module and the communication module are provided in a same physical device or in different physical devices.

In an eighth aspect, an embodiment of the present disclosure provides an intrusion detection system, including: an agent module provided in a physical node of a cloud platform system and configured to acquire behavior benchmark data of the physical node of the cloud platform system, acquire runtime behavior data of the physical node in an actual operating process of the cloud platform system, generate alarm information in a case where the behavior benchmark data conflicts with the runtime behavior data, and report the alarm information to an intrusion detection apparatus or an intrusion detection subsystem, wherein the behavior benchmark data is behavior data of the physical node in a normal operating state of the cloud platform system; and the intrusion detection apparatus or the intrusion detection subsystem configured to receive the alarm information sent by the agent module, perform corresponding processing on the alarm information to obtain a processing result, and store the alarm information and the processing result.

With the intrusion detection method provided by the embodiments of the present disclosure, intrusion detection is performed on the runtime behavior data of the physical node in the actual operating process of the cloud platform system based on the behavior benchmark data of the physical node of the cloud platform system, i.e., the behavior data of the physical node in the normal operating state of the cloud platform system, and the intrusion detection is performed merely depending on the behavior benchmark data instead of known feature codes or virus features or attack patterns, so that unknown threats can be effectively defended against, and a defense function can be improved.

### BRIEF DESCRIPTION OF DRAWINGS

FIG. 1 is a block diagram of a cloud platform system according to an embodiment of the present disclosure;
FIG. 2 is a schematic diagram of a software structure of a physical node according to an embodiment of the present disclosure;
FIG. 3 is a flowchart illustrating an intrusion detection method according to an embodiment of the present disclosure;
FIG. 4 is a flowchart illustrating an intrusion detection method according to an embodiment of the present disclosure;
FIG. 5 is a block diagram of an intrusion detection apparatus according to an embodiment of the present disclosure;
FIG. 6 is a block diagram of an intrusion detection apparatus according to an embodiment of the present disclosure;
FIG. 7 is a block diagram of an intrusion detection system according to an embodiment of the present disclosure; and
FIG. 8 is a schematic diagram illustrating an implementation of an intrusion detection system according to an embodiment of the present disclosure.

### DETAIL DESCRIPTION OF EMBODIMENTS

In order to enable those of ordinary skill in the art to better understand the technical solutions of the present disclosure, an intrusion detection method, apparatus and system, an intrusion detection subsystem, an electronic device, and a computer-readable storage medium provided by the present disclosure are described in detail below with reference to the drawings.

Exemplary embodiments of the present disclosure will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of' used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In order to allow a plurality of different service processes (even including a platform management process) to run on a same physical node of a cloud platform system, the following problems may be caused.
(1) Resource contention, that is, some processes may occupy excessive resources, resulting in exceptions of other processes.
(2) Security risk, that is, codes of the service processes are uploaded by users, which makes it hard to check and control the codes.
(3) Risk of isolation failure, that is, one malicious service process may affect other service processes.

One of main means of the cloud platform system to solve the above problems is to encapsulate the service processes into virtual machines. Each virtual machine may be regarded as a secure sandbox and can isolate the processes within the virtual machine from the outside, so that the processes cannot be easily accessed or cannot easily affect external objects. Meanwhile, the virtual machine can also set a maximum quota for use of resources, so that rationality of resource allocation can be ensured through the maximum quota together with a scheduling function of physical nodes of the platform management process.

Some anti-virus or intrusion detection systems may also be deployed in the cloud platform system to enhance overall defense capability of the cloud platform system.

However, the above means still have security problems, and most anti-virus or intrusion detection systems are based on known feature codes or virus features or attack patterns, but there are many unknown vulnerabilities and attack patterns, resulting in defects in a defense function.

In order to facilitate an understanding of the description below, a general cloud platform system is first briefly described here.

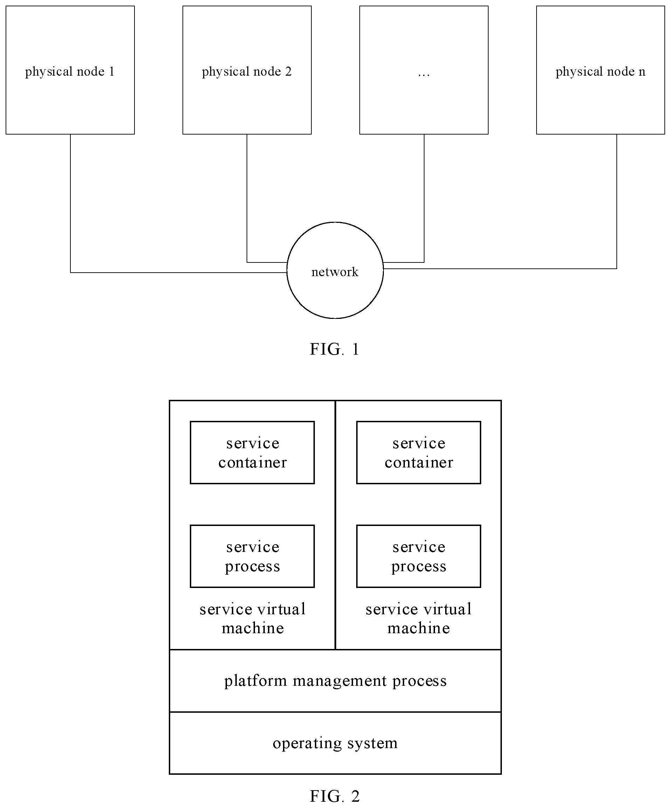

FIG. 1 is a block diagram of a cloud platform system according to an embodiment of the present disclosure.

As shown in FIG. 1, the cloud platform system includes at least one physical node, which may be implemented by a server board, and different physical nodes are connected and communicated with each other through a network.

FIG. 2 is a schematic diagram of a software structure of a physical node according to an embodiment of the present disclosure.

As shown in FIG. 2, an internal software structure of the physical node is generally divided into an operating system, a platform management process, and a service process (i.e., a service virtual machine).

The operating system includes a kernel and a system core process, is a basis for normal operation of the physical node, is responsible for management and scheduling of software/hardware resources of the physical node, and provides functional interfaces for other upper-layer processes.

The platform management process is a functional component developed and maintained by a developer of the cloud platform system, defines and realizes a function set of specific cloud platform products, and is responsible for realizing core functions which must be provided by the cloud platform system, such as resource management of the physical node to which the platform management process belongs, life cycle management of user services, load balancing, and high availability.

The platform management process generally runs on the physical node as an ordinary process, but some platform management processes may run in virtual machines or containers. When specific demands or design concepts of different cloud platform systems vary, different process running forms may be selected accordingly.

One of core tasks of the platform management process is to observe current available resources of all physical nodes in the cloud platform system all the time, and dynamically allocate each service virtual machine among different physical nodes by considering both requirements of allocated service virtual machine resources and requirements of to-be-allocate service virtual machine resources, so as to increase resource utilization of all the physical nodes as much as possible, without making loads of some physical nodes to be too high.

The service virtual machine is established by the cloud platform system in response to a request of an external user, service processes provided by the user may run in the virtual machine, running forms of the service processes are generally determined by the user, the service processes may be in a form of ordinary processes or processes running in containers, which is not concerned by the cloud platform system.

Some conventional cloud platform systems may allow a service process to directly run on a physical node in a form of a container, that is, the service process is not encapsulated in a virtual machine, but isolation provided by the container is very poor, so that the service process is very likely to affect the whole physical node. Therefore, in all current mainstream cloud platform systems, the service processes are encapsulated in the virtual machines for running.

It should be noted that FIG. 2 is merely the schematic diagram of the internal software structure of the physical node. In fact, details of the internal software structure of the physical node in the cloud platform system are much more complicated. What is shown in FIG. 2 is understood based on concepts, and is intended to facilitate an understanding of security-related issues described below.

The cloud platform system encapsulates the service processes in the virtual machines. Each virtual machine may be regarded as a secure sandbox and can isolate the processes within the virtual machine from outside, so that the processes cannot be easily accessed or cannot easily affect external objects. The virtual machine can also set a maximum quota for use of the resources, so that rationality of resource allocation can be ensured through the maximum quota together with a scheduling function of physical nodes of the platform management process. The cloud platform system may also deploy some anti-virus or intrusion detection systems to enhance overall defense capability of the cloud platform system.

The above countermeasures improve overall security of the cloud platform system, but still have some big disadvantages as follows.

It is possible to break through the virtual machine as the secure sandbox; and the virtual machine itself provides good isolation, but like other software, a management software related to the virtual machine may have defects. The industry has found many cases of allowing a process in the virtual machine through vulnerabilities or improper configuration to detect that the process itself is in the security sandbox so as to break through the sandbox and have an impact on the outside. How much similar usable vulnerability that exists in the related software is still unknown.

Some attacks may originate internally. Although the security risk faced by the cloud platform system is mainly caused by defect codes or malware (either unintentional or intentional) uploaded by users, the platform management process, the operating system, and operation and maintenance personnel of the cloud platform system may all cause the risk. Defects in codes, improper configuration, and the operation and maintenance personnel captured by social engineering means may all enable an attacker to gain control of part of the system or gain control of the whole system, which may further endanger entire infrastructure of the cloud platform system and all service payloads running thereon.

Most anti-virus or intrusion detection systems are based on feature codes or virus features or attack patterns known to the industry, and thus it needs to frequently update contents of detection libraries, which is hard to implement in many application scenarios. Moreover, many vulnerabilities and attack patterns are unknown, and thus cannot be defended against. For example, the unknown vulnerabilities and attack patterns may be some specially tailored variant malware, or any Oday vulnerability, or vulnerabilities of all security patches that have not yet been released.

In summary, the defense function provided by the above method has defects.

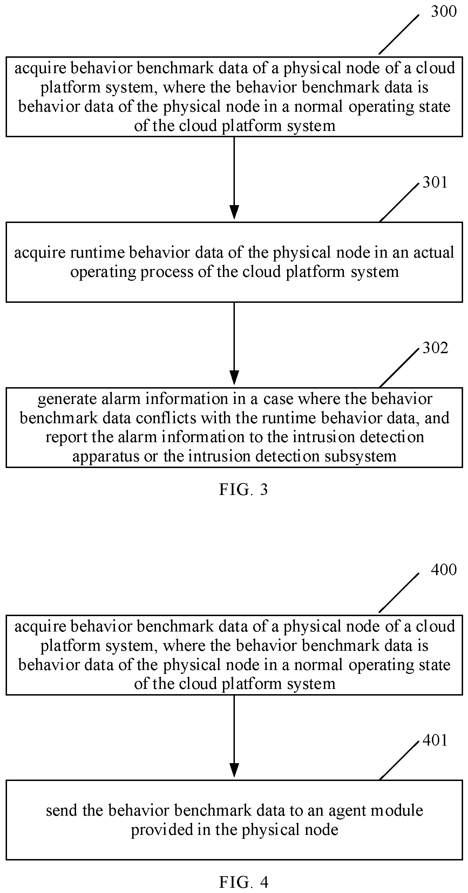

FIG. 3 is a flowchart illustrating an intrusion detection method according to an embodiment of the present disclosure.

Referring to FIG. 3, an embodiment of the present disclosure provides an intrusion detection method applied to an agent module provided in a physical node of a cloud platform system, and the agent module may be deployed in the physical node in a manual or automatic arrangement manner. When the agent module is deployed, an address or a domain name of an intrusion detection apparatus or an intrusion detection subsystem needs to be configured.

The intrusion detection method according to an embodiment of the present disclosure includes operations 300 to 302.

In operation 300, behavior benchmark data of the physical node of the cloud platform system is acquired, where the behavior benchmark data is behavior data of the physical node in a normal operating state of the cloud platform system.

In the present disclosure, the cloud platform system generally includes a plurality of physical nodes, and behavior benchmark data of different physical nodes may be the same or different. In general, the behavior benchmark data of the different physical nodes are different. Therefore, when the behavior benchmark data of the physical node of the cloud platform system is acquired, merely the behavior benchmark data of the physical node where the agent module is located needs to be acquired, and the behavior benchmark data of other physical nodes do not need to be acquired.

According to an embodiment of the present disclosure, acquiring the behavior benchmark data of the physical node of the cloud platform system includes: receiving the behavior benchmark data sent by the intrusion detection apparatus or the intrusion detection subsystem.

According to the embodiments of the present disclosure, in order to improve defense performance, defense needs to be performed based on invariant characteristics of the cloud platform system so as to cope with changes, instead of being based on known threat information, because the threat information is constantly changing and there are a large number of unknown fields.

A formal commercial production environment generally has following two very advantageous characteristics.
(1) Physical nodes, operating systems, and platform management processes are all highly controlled.
(2) Service processes controlled by users are all encapsulated in virtual machine processes, and all interactions of the service processes with outside need to be carried out through virtual machine systems, so that the service processes may be considered as being controlled to a certain extent.

In short, all objects on the physical nodes of the commercial production environment are generally strictly controlled, for example, hardware models of used hardware, versions of the operating systems, components and version numbers of installed system software, components and version numbers of platform management software, file lists of the physical nodes, resource usage ranges of service virtual machine processes and the like may all be predetermined before planning, deploying, and upgrading. For any formal commercial production environment, the above planning and control processes are generally basic methods for ensuring system stability and effective operation and maintenance.

Furthermore, except for service software, components of other software on the physical nodes are fixed and controlled, and those system codes or platform software codes are also known and not changed; although components and codes of the service software are not controlled, the components and the codes of the service software are encapsulated in the sandbox, i.e., the virtual machine, and are externally expressed as the virtual machine processes, and a legal scope of external influences caused by each virtual machine process, such as files in which directory can be accessed and which ports can be opened, is generally well planned.

That is, the invariant characteristics of the cloud platform system may refer to a legal range of the caused external influences which is pre-planned, and/or a legal range internally defined by the cloud platform system itself.

That is, the behavior benchmark data is data for defining a legal object of the physical node and/or a legal behavior boundary of the legal object. After the legal behavior boundary of the physical node of the cloud platform system is acquired, any change can be coped with accordingly, because a finally generated result of any aggressive intrusion behavior, no matter which ingenious technology is used and no matter how many complex operations are executed, basically falls in merely three types of executing some illegal operations with a certain illegal identity, executing some illegal operation with a certain legal identity, or executing some legal operations with a certain illegal identity. Regardless of a process of the aggressive intrusion behavior, the aggressive intrusion behavior can be found as an abnormal result is produced. With such detection mechanism, not only intrusion behaviors using known vulnerabilities or attack patterns can be found, intrusion behaviors using unknown vulnerabilities or attack patterns can also be found.

For example, the behavior benchmark data includes at least one of: a list of information of legal processes on the physical node; a list of information of legal files on the physical node; a list of resources accessible to the legal processes on the physical node; a range of network ports capable of being created by the legal processes on the physical node; communication terminals capable of being communicated with the legal processes on the physical node; or a set of system call functions capable of being called by the legal processes on the physical node.

According to an embodiment of the present disclosure, the resources include at least one of: files, directories, network ports, destination network addresses, destination network domain names, or hardware devices.

For example, the behavior benchmark data includes at least one of: the list of the information of the legal processes on the physical node; the list of the information of the legal files on the physical node; a range of files accessible to the legal processes on the physical node; a range of directories accessible to the legal processes on the physical node; a range of network ports accessible to the legal processes on the physical node; the range of the network ports capable of being created by the legal processes on the physical node; a range of destination network addresses accessible to the legal processes on the physical node; a range of destination network domain names accessible to the legal processes on the physical node; hardware devices accessible to the legal processes on the physical node; the communication terminals capable of being communicated with the legal processes on the physical node; or the set of system call functions capable of being called by the legal processes on the physical node.

According to an embodiment of the present disclosure, information of a process includes at least one of: a process name or a process parameter

In some exemplary embodiments, information of a file includes at least one of: a file name or a file path.

According to an embodiment of the present disclosure, the list of the information of the legal processes on the physical node may include: a sub-list of information of exempted processes.

According to an embodiment of the present disclosure, the behavior benchmark data further includes: a list of information of the exempted processes on the physical node.

According to an embodiment of the present disclosure, the list of the information of the legal files on the physical node may include: a sub-list of information of the exempted files.

According to an embodiment of the present disclosure, the behavior benchmark data further includes: a list of information of the exempted files on the physical node.

According to the embodiments of the present disclosure, an exempted process/file means that it is not necessary to determine whether a conflict with the behavior benchmark data exists in subsequent intrusion detection, that is, when comparing runtime behavior data with the behavior benchmark data.

In operation 301, runtime behavior data of the physical node in an actual operating process of the cloud platform system is acquired.

According to the embodiments of the present disclosure, in order to improve the defense function, the collected runtime behavior data needs to ensure that an underlying operating system and a platform management process are also included in a detection range, that is, the detection range needs to be large enough; and the lower the level of a detection action, the better, so as to prevent a potential attacker from bypassing or destroying the detection action, that is, an enough detection depth is needed. If the detection may be performed at a kernel level of the operating system, both requirements of the detection range and the detection depth can be met, because a level of the kernel is very low (basically merely lower than a level of hardware) in the whole system, while the kernel has very large authority and jurisdiction, so that almost no upper-layer process can be separated from support from functions of the kernel, or can be escaped from kernel-level monitoring.

At present, there are two methods for extending the functions of the kernel, that is, adding a detection-related functional logic module to the kernel to realize collection of the behavior benchmark data. One method is to implement and load a Kernel Module in the kernel, and the other method is to implement and load an extended Berkeley Packet Filter (eBPF) agent module in the kernel, that is, the above-mentioned agent module is implemented by eBPF codes, and therefore, the agent module may also be called an eBPF agent module.

The Kernel Module is an extension mode supported by the Linux kernel long ago. The Kernel Module allows extension codes written by a user to be compiled into a specific format and then to be dynamically loaded into (or unloaded from) the kernel in a pluggable manner, so that the functions of the kernel may be flexibly extended.

The Kernel Module directly runs in a kernel state, thereby having extremely high authority and small performance loss. A main disadvantage of the Kernel Module is insufficient isolation from exception protection, which is a result of a fact that any defect in codes of the Kernel Module may directly cause a crash of the kernel, and the crash of the kernel may further cause paralysis of the physical node. This is a high risk with serious consequences to the production environment. Since it is hard to ensure that there is no defect in the codes of the Kernel Module, use of a customized Kernel Module is limited in many scenarios.

On the other hand, an eBPF functional subsystem has been added to the Linux kernel of a relatively new version (above 4.3 version), and an original purpose of the addition is to implement a new packet filter to replace the iptable subsystem, but subsequent evolution greatly extends the eBPF functional subsystem. The eBPF functional subsystem is essentially a micro virtual machine running in the kernel, and user are allowed to write functional codes under specified limiting conditions, and the codes are compiled and then loaded into the kernel to be executed. Before the eBPF codes are loaded, the kernel checks the eBPF codes in terms of type, semantics, and other legality, so as to ensure that the eBPF codes do not have any defect that may cause a hang or a crash. When the eBPF codes are running, the kernel may also take some other protective measures to prevent a crash of the eBPF codes. In terms of performance, the eBPF codes are equivalent to the conventional Kernel Module.

Legal eBPF codes may be mounted on almost any probe in the kernel. Several important kinds of probes of the kernel may include the following ones.
(1) A Software/Hardware counter configured to record a count number of events of software/hardware in the kernel.
(2) Tracepoints, i.e., a batch of internal state detection points designed and reserved in advance by the kernel, mainly used for debugging of programs, analysis of call stacks, and acquisition of performance data.
(3) kProbe, i.e., a probe of a specific kernel function, which has smaller granularity than the Tracepoints, and may directly observe calling and executing situations of the specific kernel function, and is mainly used for debugging and performance analysis in general.

In a case where the eBPF codes provided by the user is mounted to a probe, every time an internal logic of the kernel is executed to the probe, the kernel may first sequentially execute the eBPF codes in a loading order, and then continues to execute the original logic. Such eBPF mechanism is equivalent to adding a programmable interface to the whole domain of the kernel, which can ensure security and also greatly improve extension flexibility of the kernel.

Among the three kinds of probes mentioned above, the software/hardware counter may vary with different software/hardware configurations of the physical node; and the kProbe may change with a change of a version of the kernel. Therefore, when an environment or the version of the kernel is changed, the original eBPF codes may need to be modified and recompiled. But for the Tracepoints, especially system call (syscall) therein, a kernel maintenance team promises cross-version interface stability of the Tracepoints. Therefore, if the eBPF codes written by the user merely relates to the syscall, the eBPF codes may be used in different environments and in kernels of different versions.

According to an embodiment of the present disclosure, the behavior benchmark data is data of calling the syscall by a legal process on the physical node which is acquired by an existing eBPF tool (e.g, bpftrace) in the normal operating state of the cloud platform system. The runtime behavior data is data of calling the syscall by a process running on the physical node which is acquired by the existing eBPF tool (e.g, bpftrace) in the actual operating process of the cloud platform system.

According to an embodiment of the present disclosure, the runtime behavior data includes at least one of: information of processes running on the physical node; information of files on the physical node; resources accessed by the processes running on the physical node; network ports created by the processes running on the physical node; communication terminals communicated with the processes running on the physical node; or system call functions called by the processes running on the physical node.

For example, the runtime behavior data includes at least one of: the information of the processes running on the physical node; the information of the files on the physical node; files accessed by the processes running on the physical node; directories accessed by the processes running on the physical node; network ports accessed by the processes running on the physical node; the network ports created by the processes running on the physical node; destination network addresses accessed by the processes running on the physical node; destination network domain names accessed by the processes running on the physical node; hardware devices accessed by the processes running on the physical node; the communication terminals communicated with the processes running on the physical node; and the system call functions called by the processes running on the physical node.

In operation 302, alarm information is generated in a case where the behavior benchmark data conflicts with the runtime behavior data, and is reported to the intrusion detection apparatus or the intrusion detection subsystem.

According to an embodiment of the present disclosure, the behavior benchmark data conflicting with the runtime behavior data includes at least one of following conditions: the list of the information of the legal processes on the physical node in the behavior benchmark data includes the information of the processes running on the physical node in the runtime behavior data; the list of the information of the legal files on the physical node in the behavior benchmark data includes the information of the files on the physical node in the runtime behavior data; the list of the resources accessible to the legal processes on the physical node in the behavior benchmark data includes the resources accessed by the processes running on the physical node in the runtime behavior data; the range of the network ports capable of being created by the legal processes on the physical node in the behavior benchmark data includes the network ports created by the processes running on the physical node in the runtime behavior data; the communication terminals capable of being communicated with the legal processes on the physical node in the behavior benchmark data include the communication terminals communicated with the processes running on the physical node in the runtime behavior data; or the set of the system call functions capable of being called by the legal processes on the physical node in the behavior benchmark data includes the system call functions called by the processes running on the physical node in the runtime behavior data.

For example, the behavior benchmark data conflicting with the runtime behavior data includes at least one of the following conditions: the list of the information of the legal processes on the physical node in the behavior benchmark data includes the information of the processes running on the physical node in the runtime behavior data; the list of the information of the legal files on the physical node in the behavior benchmark data includes the information of the files on the physical node in the runtime behavior data; the range of the files accessible to the legal processes on the physical node in the behavior benchmark data includes the files accessed by the processes running on the physical node in the runtime behavior data; the range of the directories accessible to the legal processes on the physical node in the behavior benchmark data includes the directories accessed by the processes running on the physical node in the runtime behavior data; the range of the network ports accessible to the legal processes on the physical node in the behavior benchmark data includes the network ports accessed by the processes running on the physical node in the runtime behavior data; the range of the network ports capable of being created by the legal processes on the physical node in the behavior benchmark data includes the network ports created by the processes running on the physical node in the runtime behavior data; the range of the destination network addresses accessible to the legal processes on the physical node in the behavior benchmark data includes the destination network addresses accessed by the processes running on the physical node in the runtime behavior data; the range of the destination network domain names accessible to the legal processes on the physical node in the behavior benchmark data includes the destination network domain names accessed by the processes running on the physical node in the runtime behavior data; the hardware devices accessible to the legal processes on the physical node in the behavior benchmark data include the hardware devices accessed by the processes running on the physical node in the runtime behavior data; the communication terminals capable of being communicated with the legal processes on the physical node in the behavior benchmark data include the communication terminals communicated with the processes running on the physical node in the runtime behavior data; or the set of system call functions capable of being called by the legal processes on the physical node in the behavior benchmark data includes the system call functions called by the processes running on the physical node in the runtime behavior data.

According to an embodiment of the present disclosure, before receiving the behavior benchmark data sent by the intrusion detection apparatus or the intrusion detection subsystem, the method further includes: establishing a connection with the intrusion detection apparatus or the intrusion detection subsystem. In this case, receiving the behavior benchmark data sent by the intrusion detection apparatus or the intrusion detection subsystem includes: receiving the behavior benchmark data sent by the intrusion detection apparatus or the intrusion detection subsystem through the established connection.

According to an embodiment of the present disclosure, the connection with the intrusion detection apparatus or the intrusion detection subsystem may be established according to a pre-configured address or domain name of the intrusion detection apparatus or the intrusion detection subsystem.

With the intrusion detection method according to the embodiments of the present disclosure, the intrusion detection is performed on the runtime behavior data of the physical node in the actual operating process of the cloud platform system based on the behavior benchmark data of the physical node in the normal operating state of the cloud platform system, and the intrusion detection is performed merely depending on the behavior benchmark data instead of the known feature codes or virus features or attack patterns, so that unknown threats can be effectively defended against, and the defense function can be improved.

FIG. 4 is a flowchart illustrating an intrusion detection method according to an embodiment of the present disclosure.

Referring to FIG. 4, the intrusion detection method according to an embodiment of the present disclosure includes operations 400 and 401.

In operation 400, behavior benchmark data of a physical node of a cloud platform system is acquired, where the behavior benchmark data is behavior data of the physical node in a normal operating state of the cloud platform system.

In the present disclosure, the cloud platform system generally includes a plurality of physical nodes, and behavior benchmark data of different physical nodes may be the same or different. In general, the behavior benchmark data of the different physical nodes are different. Therefore, when the behavior benchmark data of the physical node of the cloud platform system is acquired, the behavior benchmark data corresponding to the different physical nodes need to be acquired.

According to an embodiment of the present disclosure, acquiring the behavior benchmark data of the physical node of the cloud platform system includes: receiving the behavior benchmark data uploaded by a user.

According to an embodiment of the present disclosure, since the behavior benchmark data of the different physical nodes is different, when the user uploads the behavior benchmark data, the user needs to upload a corresponding relationship between information of the physical node and the behavior benchmark data, where the information of the physical node at least includes at least one of: a name of the physical node, an access address of the physical node, or authentication information of the physical node.

According to an embodiment of the present disclosure, the behavior benchmark data uploaded by the user may be acquired through a constructed benchmark environment of the cloud platform system, and may be further improved later through analysis of functional behaviors and configuration data of software. The benchmark environment may be constructed in a research and development laboratory, or may directly adopt an existing test environment, or may be a newly deployed production environment. The benchmark environment needs to be as similar as possible to an actual production environment (for example, a version of an operating system and components of software need to be the same as those in the actual production environment), so as to ensure comprehensiveness and validity of the collected behavior benchmark data. If the production environment of the cloud platform system to be detected is changed (such as software/hardware upgrading), the benchmark environment is correspondingly adjusted to be matched with the changed production environment for subsequent re-collection of the behavior benchmark data.

According to the embodiments of the present disclosure, in order to improve the defense function, the collected behavior benchmark data needs to ensure that an underlying operating system and a platform management process are also included in a detection range, that is, the detection range needs to be large enough; and the lower the level of a detection action, the better, so as to prevent a potential attacker from bypassing or destroying the detection action, that is, an enough detection depth is needed. If the detection may be performed at a kernel level of the operating system, both requirements of the detection range and the detection depth can be met, because a level of a kernel is very low (basically merely lower than a level of hardware) in the whole system, while the kernel has very large authority and jurisdiction, so that almost no upper-layer process can be separated from support from functions of the kernel, or can be escaped from kernel-level monitoring.

At present, there are two methods for extending the functions of the kernel, that is, adding a detection-related functional logic module to the kernel to realize collection of the behavior benchmark data. One method is to implement and load a Kernel Module in the kernel, and the other method is to implement and load an eBPF agent module.

The Kernel Module is an extension mode supported by the Linux kernel long ago. The Kernel Module allows extension codes written by a user to be compiled into a specific format and then to be dynamically loaded into (or unloaded from) the kernel in a pluggable manner, so that the functions of the kernel may be flexibly extended.

The Kernel Module directly runs in a kernel state, thereby having extremely high authority and small performance loss. A main disadvantage of the Kernel Module is insufficient isolation from exception protection, which is a result of a fact that any defect in codes of the Kernel Module may directly cause a crash of the kernel, and the crash of the kernel may further cause paralysis of the physical node. This is a high risk with serious consequences to the production environment. Since it is hard to ensure that there is no defect in the codes of the Kernel Module, use of a customized Kernel Module is limited in many scenarios.

On the other hand, an eBPF functional subsystem has been added to the Linux kernel of a relatively new version (above 4.3 version); and an original purpose of the addition is to implement a new packet filter to replace the iptable subsystem, but subsequent evolution greatly extends the eBPF functional subsystem. The eBPF functional subsystem is essentially a micro virtual machine running in the kernel, and users are allowed to write functional codes under specified limiting conditions, and the codes are compiled and then loaded into the kernel to be executed. Before eBPF codes are loaded, the kernel checks the eBPF codes in terms of type, semantics, and other legality, so as to ensure that the eBPF codes do not have any defect that may cause a hang or a crash. When the eBPF codes are running, the kernel may also take some other protective measures to prevent a crash of the eBPF codes. In terms of performance, the eBPF codes are equivalent to the conventional Kernel Module.

Legal eBPF codes may be mounted on almost any probe in the kernel. Several important kinds of probes of the kernel may include the following ones.
(1) A Software/Hardware counter configured to record a count number of events of software/hardware in the kernel.
(2) Tracepoints, i.e., a batch of internal state detection points designed and reserved in advance by the kernel, mainly used for debugging of programs, analysis of call stacks, and acquisition of performance data.
(3) kProbe, i.e., a probe of a specific kernel function, which has smaller granularity than the Tracepoints, and may directly observe calling and executing situations of the specific kernel function, and is mainly used for debugging and performance analysis in general.

In a case where the eBPF codes provided by the user is mounted to a probe, every time an internal logic of the kernel is executed to the probe, the kernel may first sequentially execute the eBPF codes in a loading order, and then continues to execute the original logic. Such eBPF mechanism is equivalent to adding a programmable interface to the whole domain of the kernel, which can ensure security and also greatly improve extension flexibility of the kernel.

Among the three kinds of probes mentioned above, the software/hardware counter may vary with different software/hardware configurations of the physical node; and the kProbe may change with a change of a version of the kernel. Therefore, when an environment or the version of the kernel is changed, the original eBPF codes may need to be modified and recompiled. But for the Tracepoints, especially system call (syscall) therein, a kernel maintenance team promises cross-version interface stability of the Tracepoints. Therefore, if the eBPF codes written by the user merely relates to the syscall, the eBPF codes may be used in different environments and in kernels of different versions.

According to the embodiments of the present disclosure, in order to improve defense performance, defense needs to be performed based on invariant characteristics of the cloud platform system so as to cope with changes, instead of being based on known threat information, because the threat information is constantly changing and there are a large number of unknown fields.

A formal commercial production environment generally has following two very advantageous characteristics.
(1) Physical nodes, operating systems, and platform management processes are all highly controlled.
(2) Service processes controlled by users are all encapsulated in virtual machine processes, and all interactions of the service processes with outside need to be carried out through virtual machine systems, so that the service processes may be considered as being controlled to a certain extent.

In short, all objects on the physical nodes of the commercial production environment are generally considered to be strictly controlled, for example, hardware models of used hardware, versions of the operating systems, components and version numbers of installed system software, components and version numbers of platform management software, file lists of the physical nodes, resource usage ranges of service virtual machine processes and the like may all be predetermined before planning, deploying, and upgrading. For any formal commercial production environment, the above planning and control processes are generally basic methods for ensuring system stability and effective operation and maintenance.

Furthermore, except for service software, components of other software on the physical nodes are fixed and controlled, and those system codes or platform software codes are also known and not changed; although components and codes of the service software are not controlled, the components and the codes of the service software are encapsulated in the sandbox, i.e., virtual machines, and are externally expressed as the virtual machine processes, and a legal scope of external influences caused by each virtual machine process, such as files in which directory can be accessed and which ports can be opened, is generally well planned.

That is, the invariant characteristics of the cloud platform system may refer to a pre-planned legal range of the caused external influences which is pre-planned, and/or a legal range internally defined by the cloud platform system itself.

That is, the behavior benchmark data is data for defining a legal object of the physical node and/or a legal behavior boundary of the legal object. After the legal behavior boundary of the physical node of the cloud platform system is acquired, any change can be coped with accordingly, because a finally generated result of any aggressive intrusion behavior, no matter which ingenious technology is used and no matter how many complex operations are executed, basically falls in merely three types of executing some illegal operations with a certain illegal identity, executing some illegal operation with a certain legal identity, or executing some illegal operations with a certain illegal identity. Regardless of a process of the aggressive intrusion behavior, the aggressive intrusion behavior can be found as an abnormal result is produced. With such detection mechanism, not only intrusion behaviors using known vulnerabilities or attack patterns can be found, intrusion behaviors using unknown vulnerabilities or attack patterns can also be found.

For example, the behavior benchmark data includes at least one of: a list of information of legal processes on the physical node; a list of information of legal files on the physical node; a list of resources accessible to the legal processes on the physical node; a range of network ports capable of being created by the legal processes on the physical node; communication terminals capable of being communicated with the legal processes on the physical node; or a set of system call functions capable of being called by the legal processes on the physical node.

According to an embodiment of the present disclosure, the resources include at least one of: files, directories, network ports, destination network addresses, destination network domain names, or hardware devices.

For example, the behavior benchmark data includes at least one of: the list of the information of the legal processes on the physical node; the list of the information of the legal files on the physical node; a range of files accessible to the legal processes on the physical node; a range of directories accessible to the legal processes on the physical node; a range of network ports accessible to the legal processes on the physical node; the range of the network ports capable of being created by the legal processes on the physical node; a range of destination network addresses accessible to the legal processes on the physical node; a range of destination network domain names accessible to the legal processes on the physical node; hardware devices accessible to the legal processes on the physical node; the communication terminals capable of being communicated with the legal processes on the physical node; or the set of system call functions capable of being called by the legal processes on the physical node.

According to an embodiment of the present disclosure, information of a process includes at least one of: a process name or a process parameter

According to an embodiment of the present disclosure, information of a file includes at least one of: a file name or a file path.

According to an embodiment of the present disclosure, the list of the information of the legal processes on the physical node may include: a sub-list of information of exempted processes.

According to an embodiment of the present disclosure, the behavior benchmark data further includes: a list of information of the exempted processes on the physical node.

According to an embodiment of the present disclosure, the list of the information of the legal files on the physical node may include: a sub-list of information of the exempted files.

According to an embodiment of the present disclosure, the behavior benchmark data further includes: a list of information of the exempted files on the physical node.

According to the embodiments of the present disclosure, an exempted process/file means that that it is not necessary to determine whether a conflict with the behavior benchmark data exists in subsequent intrusion detection, that is, when comparing runtime behavior data with the behavior benchmark data.

According to an embodiment of the present disclosure, the behavior benchmark data may be acquired with a plurality of general methods, and merely one example that may be implemented is given as follows: the list of the information of the files on the physical node may be acquired by a "find" command; the list of the information of the processes on the physical node may be acquired by a "top" command; for a specific process, information of a file opened by the process may be acquired by a "ls-1/proc/process ID/fd" command; information of all inter-process communication (ipc), such as information of the communication terminals, may be acquired by an "ipcs" command; since all devices on the Linux are also files, the hardware devices accessed by the processes may be known by the "ls-l/proc/process ID/fd" command; a situation of calling the syscall by a designated process may be obtained by a strace-p process ID; and data of calling the syscall by the physical node may be acquired by a an existing eBPF tool (e.g., bpftrace).

After being acquired, the above data may be simply processed into a uniform data format (e.g., HashMap), which facilitates searching and matching, for storage and use.

In operation 401, the behavior benchmark data is sent to an agent module provided in the physical node.

According to an embodiment of the present disclosure, since the behavior benchmark data of the different physical nodes is different, the behavior benchmark data needs to be sent to the agent module in the corresponding physical node.

According to an embodiment of the present disclosure, the method further includes: receiving alarm information sent by the agent module, and performing corresponding processing on the alarm information to obtain a processing result; and storing the alarm information and the processing result.

According to an embodiment of the present disclosure, performing the corresponding processing on the alarm information to obtain the processing result includes: performing the corresponding processing on the alarm information according to preset alarm information management configuration data to obtain the processing result.

According to an embodiment of the present disclosure, the alarm information and the processing result need to be stored corresponding to each other, that is, a corresponding relationship between the alarm information and the processing result needs to be stored.

According to an embodiment of the present disclosure, before sending the behavior benchmark data to the physical node, the method further includes: establishing a connection with the agent module. In this case, sending the behavior benchmark data to the agent module provided in the physical node includes: sending the behavior benchmark data to the agent module through the established connection.

According to an embodiment of the present disclosure, the method further includes: receiving a physical node registration request, which includes: information of the physical node; and storing information of the physical node.

According to an embodiment of the present disclosure, the information of the physical node includes at least one of: a name of the physical node, an access address of the physical node, or authentication information of the physical node.

According to an embodiment of the present disclosure, the method further includes: receiving a data acquisition request sent by the user; and acquiring data corresponding to the data acquisition request, and displaying the acquired data.

The data acquired by the user may be current alarm information and a corresponding processing result, or historical alarm information and a corresponding processing result, or the behavior benchmark data of the physical node, or connection state information and operating state information of the agent module, etc.

With the intrusion detection method according to the embodiments of the present disclosure, intrusion detection is performed on runtime behavior data of the physical node in an actual operating process of the cloud platform system based on the behavior benchmark data of the physical node in the normal operating state of the cloud platform system, and the intrusion detection is performed merely depending on the behavior benchmark data instead of known feature codes or virus features or attack patterns, so that unknown threats can be effectively defended against, and defense performance can be improved.

The present disclosure further provides an electronic device. The electronic device includes: at least one processor; and a memory having stored thereon at least one program which, when executed by the at least one processor, implements an intrusion detection method as described above.

The processor is a device having a data processing capability, and includes, but is not limited to, a Central Processing Unit (CPU); and the memory is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH).

According to an embodiment of the present disclosure, the processor and the memory are connected to each other through a bus, and are then connected to other components of a computing device.

The present disclosure further provides a computer-readable storage medium having stored thereon a computer program which, when executed by a processor, implements an intrusion detection method as described above.

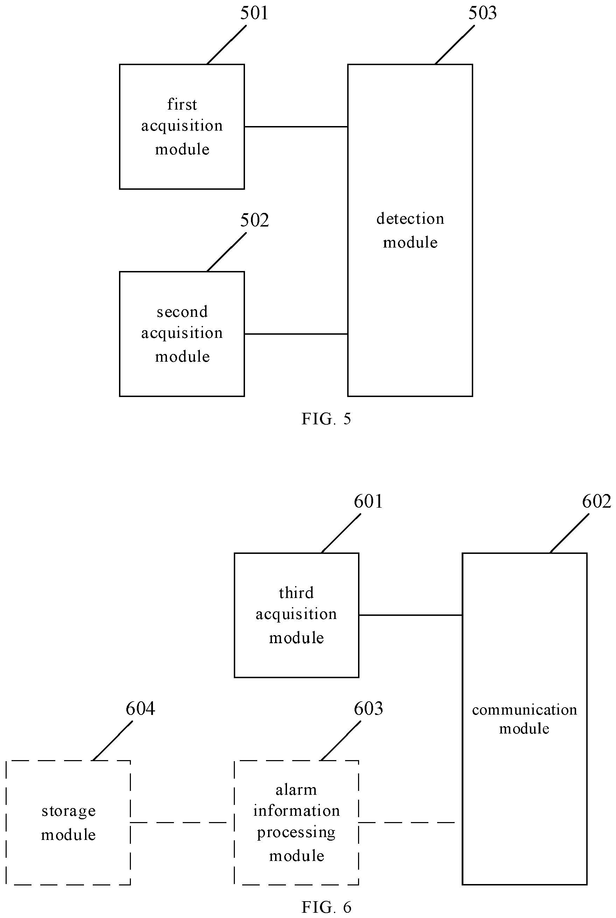

FIG. 5 is a block diagram of an intrusion detection apparatus according to an embodiment of the present disclosure.

The intrusion detection apparatus according to an embodiment of the present disclosure includes: a first acquisition module 501, a second acquisition module 502, and a detection module 503.

The first acquisition module 501 is configured to acquire behavior benchmark data of a physical node of a cloud platform system, where the behavior benchmark data is behavior data of the physical node in a normal operating state of the cloud platform system.

The second acquisition module 502 is configured to acquire runtime behavior data of the physical node in an actual operating process of the cloud platform system.

The detection module 503 is configured to generate alarm information in a case where the behavior benchmark data conflicts with the runtime behavior data, and report the alarm information to an intrusion detection apparatus or an intrusion detection subsystem.

According to an embodiment of the present disclosure, the first acquisition module 501 is configured to receive the behavior benchmark data sent by the intrusion detection apparatus or the intrusion detection subsystem.

According to an embodiment of the present disclosure, the first acquisition module 501 is further configured to establish a connection with the intrusion detection apparatus or the intrusion detection subsystem, and receive the behavior benchmark data sent by the intrusion detection apparatus or the intrusion detection subsystem through the established connection.

According to an embodiment of the present disclosure, the behavior benchmark data includes at least one of: a list of information of legal processes on the physical node; a list of information of legal files on the physical node; a list of resources accessible to the legal processes on the physical node; a range of network ports capable of being created by the legal processes on the physical node; communication terminals capable of being communicated with the legal processes on the physical node; or a set of system call functions capable of being called by the legal processes on the physical node.

According to an embodiment of the present disclosure, the resources include at least one of: files, directories, network ports, destination network addresses, destination network domain names, or hardware devices.

According to an embodiment of the present disclosure, the second acquisition module 502 is further configured to acquire the runtime behavior data by an eBPF agent module provided in the physical node.

In some exemplary embodiments, the runtime behavior data includes at least one of: information of processes running on the physical node; information of files on the physical node; resources accessed by the processes running on the physical node; network ports created by the processes running on the physical node; communication terminals communicated with the processes running on the physical node; or system call functions called by the processes running on the physical node.

According to an embodiment of the present disclosure, the behavior benchmark data conflicting with the runtime behavior data includes at least one of following conditions: the list of the information of the legal processes on the physical node in the behavior benchmark data includes the information of the processes running on the physical node in the runtime behavior data; the list of the information of the legal files on the physical node in the behavior benchmark data includes the information of the files on the physical node in the runtime behavior data; the list of the resources accessible to the legal processes on the physical node in the behavior benchmark data includes the resources accessed by the processes running on the physical node in the runtime behavior data; the range of the network ports capable of being created by the legal processes on the physical node in the behavior benchmark data includes the network ports created by the processes running on the physical node in the runtime behavior data; the communication terminals capable of being communicated with the legal processes on the physical node in the behavior benchmark data include the communication terminals communicated with the processes running on the physical node in the runtime behavior data; or the set of the system call functions capable of being called by the legal processes on the physical node in the behavior benchmark data includes the system call functions called by the processes running on the physical node in the runtime behavior data.

An implementation process of the intrusion detection apparatus according to the embodiments of the present disclosure is the same as that of the intrusion detection method described in the foregoing embodiments, and thus will not be repeated here.

FIG. 6 is a block diagram of an intrusion detection apparatus according to an embodiment of the present disclosure.

The intrusion detection apparatus according to an embodiment of the present disclosure includes: a third acquisition module 601 and a communication module 602.

The third acquisition module 601 is configured to acquire behavior benchmark data of a physical node of a cloud platform system, where the behavior benchmark data is behavior data of the physical node in a normal operating state of the cloud platform system.

The communication module 602 is configured to send the behavior benchmark data to an agent module provided in the physical node.

According to an embodiment of the present disclosure, the communication module 602 is further configured to receive alarm information sent by the agent module.

According to an embodiment of the present disclosure, the intrusion detection apparatus may further include: an alarm information processing module 603 and a storage module 604.

The alarm information processing module 603 is configured to perform corresponding processing on the alarm information to obtain a processing result.

The storage module 604 is configured to store the alarm information and the processing result.

According to an embodiment of the present disclosure, the communication module 602 is further configured to establish a connection with the agent module, and send the behavior benchmark data to the agent module through the established connection.

According to an embodiment of the present disclosure, the third acquisition module 601 is specifically configured to receive the behavior benchmark data uploaded by a user.

According to an embodiment of the present disclosure, the behavior benchmark data includes at least one of: a list of information of legal processes on the physical node; a list of information of legal files on the physical node; a list of resources accessible to the legal processes on the physical node; a range of network ports capable of being created by the legal processes on the physical node; communication terminals capable of being communicated with the legal processes on the physical node; or a set of system call functions capable of being called by the legal processes on the physical node.

According to an embodiment of the present disclosure, the resources include at least one of: files, directories, network ports, destination network addresses, destination network domain names, or hardware devices.

An implementation process of the intrusion detection apparatus according to the embodiments of the present disclosure is the same as that of the intrusion detection method described in the foregoing embodiments, and thus will not be repeated here.

The present disclosure further provides an intrusion detection subsystem, including: a third acquisition module and a communication module.

The third acquisition module is configured to acquire behavior benchmark data of a physical node of a cloud platform system; and the behavior benchmark data is behavior data of the physical node in a normal operating state of the cloud platform system.

The communication module is configured to send the behavior benchmark data to an agent module provided in the physical node.

The third acquisition module and the communication module are provided in a same physical node or in different physical nodes.

According to an embodiment of the present disclosure, the communication module is further configured to receive alarm information sent by the agent module.

According to an embodiment of the present disclosure, the intrusion detection subsystem may further include: an alarm information processing module and a storage module.

The alarm information processing module is configured to perform corresponding processing on the alarm information to obtain a processing result.

The storage module is configured to store the alarm information and the processing result.

The third acquisition module, the communication module, the alarm information processing module, and the storage module are provided in a same physical node or in different physical nodes.

According to an embodiment of the present disclosure, the communication module is further configured to establish a connection with the agent module, and send the behavior benchmark data to the agent module through the established connection.

According to an embodiment of the present disclosure, the third acquisition module is specifically configured to receive the behavior benchmark data uploaded by a user.

According to an embodiment of the present disclosure, the behavior benchmark data includes at least one of: a list of information of legal processes on the physical node; a list of information of legal files on the physical node; a list of resources accessible to the legal processes on the physical node; a range of network ports capable of being created by the legal processes on the physical node; communication terminals capable of being communicated with the legal processes on the physical node; or a set of system call functions capable of being called by the legal processes on the physical node.

According to an embodiment of the present disclosure, the resources include at least one of: files, directories, network ports, destination network addresses, destination network domain names, or hardware devices.

An implementation process of the intrusion detection subsystem according to the embodiments of the present disclosure is the same as that of the intrusion detection method described in the foregoing embodiments, and thus will not be repeated here.

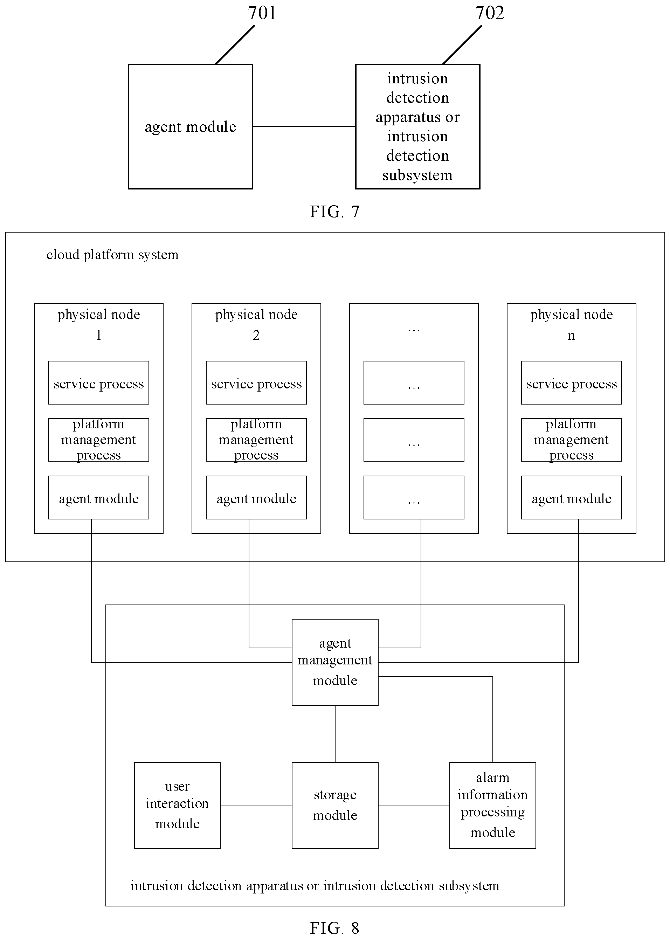

FIG. 7 is a block diagram of an intrusion detection system according to an embodiment of the present disclosure.

Referring to FIG. 7, the intrusion detection system according to an embodiment of the present disclosure includes: an agent module 701 provided in a physical node of a cloud platform system, and an intrusion detection apparatus or intrusion detection subsystem 702.

The agent module 701 is configured to acquire behavior benchmark data of the physical node of the cloud platform system, where the behavior benchmark data is behavior data of the physical node in a normal operating state of the cloud platform system, to acquire runtime behavior data of the physical node in an actual operating process of the cloud platform system, to generate alarm information in a case where the behavior benchmark data conflicts with the runtime behavior data, and to report the alarm information to the intrusion detection apparatus or intrusion detection subsystem.

The intrusion detection apparatus or intrusion detection subsystem 702 is configured to receive the alarm information sent by the agent module, perform corresponding processing on the alarm information to obtain a processing result, and store the alarm information and the processing result.

According to an embodiment of the present disclosure, the intrusion detection apparatus or intrusion detection subsystem 702 is further configured to acquire the behavior benchmark data of the physical node of the cloud platform system, and send the behavior benchmark data to the agent module.

The agent module 701 is further configured to achieve acquisition of the behavior benchmark data of the physical node of the cloud platform system in a way of receiving the behavior benchmark data sent by the intrusion detection apparatus or intrusion detection subsystem.

According to an embodiment of the present disclosure, the intrusion detection apparatus or intrusion detection subsystem 702 is further configured to achieve acquisition of the behavior benchmark data of the physical node of the cloud platform system in a way of establishing a connection with the agent module of the physical node; and sending the behavior benchmark data to the agent module of the physical node through the established connection.

The agent module 701 is further configured to achieve acquisition of the behavior benchmark data of the physical node of the cloud platform system in a way of establishing a connection with the intrusion detection apparatus or intrusion detection subsystem; and receiving the behavior benchmark data sent by the intrusion detection apparatus or intrusion detection subsystem through the established connection.

According to an embodiment of the present disclosure, the intrusion detection apparatus or intrusion detection subsystem 702 is further configured to achieve acquisition of the behavior benchmark data of the physical node of the cloud platform system in a way of receiving the behavior benchmark data uploaded by a user.

According to an embodiment of the present disclosure, the behavior benchmark data includes at least one of: a list of information of legal processes on the physical node; a list of information of legal files on the physical node; a list of resources accessible to the legal processes on the physical node; a range of network ports capable of being created by the legal processes on the physical node; communication terminals capable of being communicated with the legal processes on the physical node; or a set of system call functions capable of being called by the legal processes on the physical node.

According to an embodiment of the present disclosure, the resources include at least one of: files, directories, network ports, destination network addresses, destination network domain names, or hardware devices.

According to an embodiment of the present disclosure, the agent module 701 is further configured to achieve acquisition of the runtime behavior data of the physical node in the actual operating process of the cloud platform system in a way of acquiring the runtime behavior data through an eBPF agent module provided in the physical node.

According to an embodiment of the present disclosure, the runtime behavior data includes at least one of: information of processes running on the physical node; information of files on the physical node; resources accessed by the processes running on the physical node; network ports created by the processes running on the physical node; communication terminals communicated with the processes running on the physical node; or system call functions called by the processes running on the physical node.

According to an embodiment of the present disclosure, the behavior benchmark data conflicting with the runtime behavior data includes at least one of following conditions: the list of the information of the legal processes on the physical node in the behavior benchmark data includes the information of the processes running on the physical node in the runtime behavior data; the list of the information of the legal files on the physical node in the behavior benchmark data includes the information of the files on the physical node in the runtime behavior data; the list of the resources accessible to the legal processes on the physical node in the behavior benchmark data includes the resources accessed by the processes running on the physical node in the runtime behavior data; the range of the network ports capable of being created by the legal processes on the physical node in the behavior benchmark data includes the network ports created by the processes running on the physical node in the runtime behavior data; the communication terminals capable of being communicated with the legal processes on the physical node in the behavior benchmark data include the communication terminals communicated with the processes running on the physical node in the runtime behavior data; or the set of the system call functions capable of being called by the legal processes on the physical node in the behavior benchmark data includes the system call functions called by the processes running on the physical node in the runtime behavior data.

An implementation process of the intrusion detection system according to the embodiments of the present disclosure is the same as that of the intrusion detection method described in the foregoing embodiments, and thus will not be repeated herein.

FIG. 8 is a schematic diagram illustrating an implementation of an intrusion detection system according to an embodiment of the present disclosure.

As shown in FIG. 8, the intrusion detection system includes: agent modules provided in physical nodes of a cloud platform system, and an intrusion detection apparatus or an intrusion detection subsystem.

The intrusion detection apparatus or the intrusion detection subsystem includes: an agent management module, a user interaction module, a storage module, and an alarm information processing module.

The agent management module, the user interaction module, the storage module, and the alarm information processing module may be provided in a same physical device or in different physical devices.

The intrusion detection apparatus or the intrusion detection subsystem may be implemented by adopting micro-service architecture, and have all key components deployed and run in a containerization mode. That is, each of the agent management module, the user interaction module, the storage module, and the alarm information processing module may be regarded as a micro-service.

Functions of each module are described in detail below.

### (I) Agent modules

Each of the agent modules is connected to the agent management module, acquires behavior benchmark data as a detection base, continuously acquires runtime behavior data of a physical node where the agent module is located, performs comparison and detection based on the behavior benchmark data, generates alarm information in a case where the behavior benchmark data conflicts with the runtime behavior data, and reports the alarm information to the agent management module. The agent management module may transmit the alarm information to the alarm information processing module in a pass-through manner.

For example, the agent module establish connections with the agent management module; and in a case receiving the behavior benchmark data, which is sent by the agent management module, of a physical node where the agent module is located, the agent module configures the behavior benchmark data therein; and the agent module acquires in real time the runtime behavior data of the physical node where the agent module is located, compares the runtime behavior data with the behavior benchmark data, generates alarm information in the case where the runtime behavior data conflicts with the behavior benchmark data, and send the alarm information to the agent management module.

### (II) Agent management module

The agent management module is responsible for establishing connections with the agent modules of all physical nodes, maintaining all the connections with the agent modules, sending connection state information to the storage module, acquiring corresponding relationships between information of the physical nodes and the behavior benchmark data from the storage module, and configuring the agent modules based on the corresponding relationships. The agent management module also serves as a channel for the report of the alarm information by the agent modules.

For example, the agent management module establishes connections with all the agent modules and sends connection state information and operating state information of all the agent modules to the storage module; in a case of receiving the corresponding relationships between the information of the physical nodes and the behavior benchmark data sent by the storage module, the agent management module sends the corresponding behavior benchmark data to the agent modules in the corresponding physical nodes according to the information of the physical nodes; and in a case of receiving the alarm information sent by the agent modules, the agent management module transmits the alarm information to the alarm information processing module in a pass-through manner.

### (III) User interaction module

The user interaction module is responsible for providing a user interaction interface and a function interface. A user may, through the interaction interface or the function interface provided by the user interaction module, register the physical nodes, upload the behavior benchmark data of the physical nodes of the cloud platform system, and observe current and historical alarm information and corresponding processing results. The data received by the user interaction module is sent to the storage module for archiving and persistent storage.

For example, in a case of receiving a physical node registration request sent by the user, the user interaction module sends information of a physical node in the physical node registration request to the storage module; in a case of receiving a corresponding relationship between the information of the physical node and behavior benchmark data uploaded by the user, the user interaction module sends the corresponding relationship between the information of the physical node and the behavior benchmark data to the storage module; in a case of receiving a data acquisition request sent by the user, the user interaction module sends the data acquisition request to the storage module; and in a case of receiving data which is sent by the storage module and is corresponding to the data acquisition request, the user interaction module displays the data corresponding to the data acquisition request.

### (IV) Storage module

The storage module is responsible for data storage and data interaction, stores the data input from the user interaction module, provides a specified data set according to a request from the user interaction module, provides the corresponding relationships between the information of the physical nodes and the behavior benchmark data to the agent management module, stores agent information provided by the agent management module, stores the alarm information and the processing results input from the alarm information processing module, and provides alarm information management configuration data for the alarm information processing module.

For example, in a case of receiving the information of the physical nodes sent by the user interaction module, the storage module stores the information of the physical nodes; in a case of receiving the corresponding relationships between the information of the physical nodes and the behavior benchmark data sent by the user interaction module, the storage module stores the corresponding relationships between the information of the physical nodes and the behavior benchmark data; in a case of receiving the data acquisition request sent by the user interaction module, the storage module acquires the data corresponding to the data acquisition request and sends the acquired data to the user interaction module; the storage module may actively or passively send the corresponding relationships between the information of the physical nodes and the behavior benchmark data to the agent management module; the storage module presets the alarm information management configuration data and sends the alarm information management configuration data to the alarm information processing module; in a case of receiving corresponding relationships between the alarm information and the processing results which are sent by the alarm information processing module, the storage module stores the corresponding relationships between the alarm information and the processing results; and in a case of receiving the connection state information and the operating state information (i.e., the agent information) of the agent modules which are sent by the agent management module, the storage module stores corresponding relationships between the agent modules and the connection state information.

### (V) Alarm information processing module

The alarm information processing module acquires the alarm information management configuration data from the storage module, acquires the alarm information reported by the agent modules from the agent management module, triggers execution of related processing on the alarm information according to the alarm information management configuration data, and sends the alarm information and the processing results to the storage module for archiving.

For example, in a case of receiving the alarm information management configuration data sent by the storage module and also receiving the alarm information sent by the agent management module, the alarm information processing module performs corresponding processing on the alarm information to obtain the processing result, and sends the corresponding relationships between the alarm information and the processing results to the storage module.

Internal components of each agent module are described below.

Each agent module generally includes three parts therein: a main frame submodule, an eBPF auxiliary library submodule, and an eBPF byte code submodule.

The main frame submodule is mainly responsible for implementing basic frame functions of the agent module. For example, the basic frame functions include establishing a connection and communicate with the agent management module, mounting the eBPF byte code submodule to the kernel (generally through a convenience function provided by the eBPF auxiliary library submodule), receiving the behavior benchmark data provided by the agent management module, acquiring the runtime behavior data returned by the eBPF byte code submodule, comparing the runtime behavior data with the behavior benchmark data, generating the alarm information when the runtime behavior data conflicts with the behavior benchmark data, and sending the alarm information to the agent management module.

The eBPF auxiliary library submodule is generally a convenience function library, and the functions provided by the eBPF auxiliary library submodule may enable the main frame submodule to manage the eBPF byte code submodule and interact data with the eBPF byte code submodule more conveniently, such as loading/unloading the eBPF byte code submodule to/from the kernel, and acquiring output data (i.e., the runtime behavior data) from a buffer.

The eBPF byte code submodule is a program actually running in an eBPF virtual machine in the kernel. In a case where the eBPF byte code submodule exists in a form of a virtual-machine machine code, the eBPF byte code submodule is generally first developed using the C/C++ language (due to a special limitation of the eBPF virtual machine, a subset of the C/C++ language is actually used), and then byte codes in an eBPF format are output by a clang compiler, and finally the byte codes are incorporated into the agent module.

At present, a plurality of implementations of the eBPF auxiliary library exist in the industry, and different libraries vary in terms of implementation languages, function richness, and packaging levels. The main eBPF auxiliary libraries include the following ones.
(I) bcc (https://github.com/iovisor/bcc): allowing a developer to develop an eBPF program using a plurality of languages. The developer may selectively use the functional functions provided by bcc to indirectly generate a final eBPF byte code, and may also use the functions of bcc to load an existing eBPF byte code.
(II) bpftrace (https://github.com/iovisor/bpftrace): providing a custom script language. A developer merely needs to write scripts, and the program can automatically generate a corresponding eBPF byte code and load the eBPF byte code to the kernel to execute.
(III) gobpf (https://github.com/iovisor/gobpf): an auxiliary library implemented in the golang language. A developer needs to provide eBPF byte codes by himself or write an eBPF program using an assembly language function in the library, and then uses other functions provided by the library to implement a final golang binary program.
(IV) libbpf (https://github.com/libbpf/libbpf): an auxiliary library implemented in the C/C++ language. A developer needs to provide eBPF byte codes by himself or write an eBPF program using an assembly language function in the library, and then uses other functions provided by the library to implement a final C/C++ binary program.

When the eBPF auxiliary library is implemented, the selection of the eBPF auxiliary library often determines an implementation language and a possible dependent library of the main frame submodule. Of course, a developer is allowed not to use any dependent library and to merely use the C/C++ language to cooperate with kernel codes to complete all parts (main application logic + eBPF management + eBPF byte codes), but doing so is faced with a heavy workload and great difficulty. Therefore, in general, it is suggested to perform development based on one of the above main auxiliary libraries. Reference may be made to help documents and examples of a corresponding auxiliary library for specific development operations and methods.

Internal components of the agent management module are described below.

The agent management module generally includes three parts therein: a connection management submodule, a behavior benchmark data management submodule, and an alarm management submodule.

The connection management submodule is responsible for maintaining a connection with each agent module and keeping the connection alive, recording the connection state information and the operating state information of each agent module, and sending the connection state information and the operating state information of each agent module to the storage module.

The behavior benchmark data management submodule acquires the behavior benchmark data of different physical nodes from the storage module, sends the behavior benchmark data to the corresponding agent modules, and sends, when the behavior benchmark data in the storage module is changed, the new behavior benchmark data to the corresponding agent modules in time.

The alarm management submodule is responsible for sending the alarm information to the alarm information processing module.

The agent management module does not contain any eBPF-related technical implementation, and is merely a very general data and state maintainer. Therefore, the agent management module may be implemented using any mainstream programming language and any mainstream framework library without any particular limitation or restriction.

The specific functions of each of the above modules are not limited herein. The specific functions of each of the above modules may also be implemented b smaller modules, or the functions of two or more modules may be combined to be implemented by one large module. A division of the modules is not limited in the embodiments of the present disclosure, and a specific division of the modules is not intended to limit the scope of the embodiments of the present disclosure.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiment using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiment. Therefore, it should be understood by those of ordinary skill in the art that various changes in the forms and the details can be made without departing from the scope of the present disclosure of the appended claims.

## Claims

1. An intrusion detection method, comprising:
acquiring behavior benchmark data of a physical node of a cloud platform system, wherein the behavior benchmark data is behavior data of the physical node in a normal operating state of the cloud platform system;
acquiring runtime behavior data of the physical node in an actual operating process of the cloud platform system; and
generating alarm information in a case where the behavior benchmark data conflicts with the runtime behavior data, and reporting the alarm information to an intrusion detection apparatus or an intrusion detection subsystem.

2. The intrusion detection method of claim 1, wherein acquiring the behavior benchmark data of the physical node of the cloud platform system comprises:
receiving the behavior benchmark data sent by the intrusion detection apparatus or the intrusion detection subsystem.

3. The intrusion detection method of claim 2, before receiving the behavior benchmark data sent by the intrusion detection apparatus or the intrusion detection subsystem, the method further comprises:
establishing a connection with the intrusion detection apparatus or the intrusion detection subsystem,
wherein receiving the behavior benchmark data sent by the intrusion detection apparatus or the intrusion detection subsystem comprises:
receiving the behavior benchmark data sent by the intrusion detection apparatus or the intrusion detection subsystem through the established connection.

4. The intrusion detection method of claim 1, wherein the behavior benchmark data comprises at least one of:
a list of information of legal processes on the physical node;
a list of information of legal files on the physical node;
a list of resources accessible to the legal processes on the physical node;
a range of network ports capable of being created by the legal processes on the physical node;
communication terminals capable of being communicated with the legal processes on the physical node; or
a set of system call functions capable of being called by the legal processes on the physical node.

5. The intrusion detection method of claim 4, wherein the resources comprise at least one of:
files, directories, network ports, destination network addresses, destination network domain names, or hardware devices.

6. The intrusion detection method of any one of claims 1 to 5, wherein acquiring the runtime behavior data of the physical node in the actual operating process of the cloud platform system comprises:
acquiring the runtime behavior data with an extended Berkeley Packet Filter (eBPF) agent module provided in the physical node.

7. The intrusion detection method of any one of claims 1 to 5, wherein the runtime behavior data comprises at least one of:
information of processes running on the physical node;
information of files on the physical node;
resources accessed by the processes running on the physical node;
network ports created by the processes running on the physical node;
communication terminals communicated with the processes running on the physical node; or
system call functions called by the processes running on the physical node.

8. The intrusion detection method of any one of claims 1 to 5, wherein the behavior benchmark data conflicting with the runtime behavior data comprises at least one of conditions that
the list of the information of the legal processes on the physical node in the behavior benchmark data comprises the information of the processes running on the physical node in the runtime behavior data;
the list of the information of the legal files on the physical node in the behavior benchmark data comprises the information of the files on the physical node in the runtime behavior data;
the list of resources accessible to the legal processes on the physical node in the behavior benchmark data comprises the resources accessed by the processes running on the physical node in the runtime behavior data;
the range of the network ports capable of being created by the legal processes on the physical node in the behavior benchmark data comprises the network ports created by the processes running on the physical node in the runtime behavior data;
the communication terminals capable of being communicated with the legal processes on the physical node in the behavior benchmark data comprise the communication terminals communicated with the processes running on the physical node in the runtime behavior data; or
the set of system call functions capable of being called by the legal processes on the physical node in the behavior benchmark data comprises the system call functions called by the processes running on the physical node in the runtime behavior data.

9. An intrusion detection method, comprising:
acquiring behavior benchmark data of a physical node of a cloud platform system, wherein the behavior benchmark data is behavior data of the physical node in a normal operating state of the cloud platform system; and
sending the behavior benchmark data to an agent module provided in the physical node.

10. The intrusion detection method of claim 9, further comprising:
receiving alarm information sent by the agent module, and performing corresponding processing on the alarm information to obtain a processing result; and
storing the alarm information and the processing result.

11. The intrusion detection method of claim 9, before sending the behavior benchmark data to the physical node, the method further comprises:
establishing a connection with the agent module,
wherein sending the behavior benchmark data to the agent module provided in the physical node comprises:
sending the behavior benchmark data to the agent module through the established connection.

12. The intrusion detection method of any one of claims 9 to 11, wherein acquiring the behavior benchmark data of the physical node of the cloud platform system comprises:
receiving the behavior benchmark data uploaded by a user.

13. The intrusion detection method of any one of claims 9 to 11, wherein the behavior benchmark data comprises at least one of:
a list of information of legal processes on the physical node;
a list of information of legal files on the physical node;
a list of resources accessible to the legal processes on the physical node;
a range of network ports capable of being created by the legal processes on the physical node;
communication terminals capable of being communicated with the legal processes on the physical node; or
a set of system call functions capable of being called by the legal processes on the physical node.

14. The intrusion detection method of claim 13, wherein the resources comprise at least one of:
files, directories, network ports, destination network addresses, destination network domain names, or hardware devices.

15. An electronic device, comprising:
at least one processor; and
a memory having stored thereon at least one program which, when executed by the at least one processor, implements the intrusion detection method of any one of claims 1 to 8, or implements the intrusion detection method of any one of claims 9 to 14.

16. A computer-readable storage medium having stored thereon a computer program which, when executed by a processor, implements the intrusion detection method of any one of claims 1 to 8, or implements the intrusion detection method of any one of claims 9 to 14.

17. An intrusion detection apparatus, comprising:
a first acquisition module configured to acquire behavior benchmark data of a physical node of a cloud platform system, wherein the behavior benchmark data is behavior data of the physical node in a normal operating state of the cloud platform system;
a second acquisition module configured to acquire runtime behavior data of the physical node in an actual operating process of the cloud platform system; and
a detection module configured to generate alarm information in a case where the behavior benchmark data conflicts with the runtime behavior data, and report the alarm information to an intrusion detection apparatus or an intrusion detection subsystem.

18. An intrusion detection apparatus, comprising:
a third acquisition module configured to acquire behavior benchmark data of a physical node of a cloud platform system, wherein the behavior benchmark data is behavior data of the physical node in a normal operating state of the cloud platform system; and
a communication module configured to send the behavior benchmark data to an agent module provided in the physical node.

19. An intrusion detection subsystem, comprising:
a third acquisition module configured to acquire behavior benchmark data of a physical node of a cloud platform system, wherein the behavior benchmark data is behavior data of the physical node in a normal operating state of the cloud platform system; and
a communication module configured to send the behavior benchmark data to an agent module provided in the physical node,
wherein the third acquisition module and the communication module are provided in a same physical device or in different physical devices.

20. An intrusion detection system, comprising:
an agent module provided in a physical node of a cloud platform system and configured to acquire behavior benchmark data of the physical node of the cloud platform system, acquire runtime behavior data of the physical node in an actual operating process of the cloud platform system, generate alarm information in a case where the behavior benchmark data conflicts with the runtime behavior data, and report the alarm information to an intrusion detection apparatus or an intrusion detection subsystem, wherein the behavior benchmark data is behavior data of the physical node in a normal operating state of the cloud platform system; and
the intrusion detection apparatus or the intrusion detection subsystem configured to receive the alarm information sent by the agent module, perform corresponding processing on the alarm information to obtain a processing result, and store the alarm information and the processing result.
